# EUROPEAN PATENT SPECIFICATION

(11) **EP 2 796 844 B1**
(45) Date of publication and mention of the grant of the patent: **25.12.2019**
(21) Application number: 13165416.2
(22) Date of filing: 25.04.2013
(51) Int. Cl.: G01L 9/00

(54) **Mems capacitive pressure sensor**
Kapazitativer MEMS-Drucksensor
Capteur de pression capacitif MEMS

(43) Date of publication of application: 29.10.2014
(73) Proprietor: ams International AG, 8640 Rapperswil-Jona (CH)
(72) Inventor: Besling, Willem, 8640 Rapperswil-Jona (CH); Pijnenburg, Remco Henricus Wilhelmus, 8640 Rapperswil-Jona (CH); Bominaar-Silkens, Iris, 8640 Rapperswil-Jona (CH)
(74) Representative: Epping - Hermann - Fischer

(56) References cited:
- EP-A2- 1 223 420
- US-B1- 7 487 681

## Description

This invention relates to MEMS capacitive pressure sensors.

MEMS pressure sensors are well known, and typically have a piezo-resistive or a capacitive read-out, to detect movement of a suspended structure when it is subjected to an external pressure. One example of known device uses a thin circular suspended SiN membrane, which is used within a capacitive MEMS pressure gauge.

The cavity underneath the SiN membrane is hermitically closed by means of a PECVD SiN process, for example using a 2 µm thick PECVD SiN film. The final device performance is largely determined by the physical, mechanical and structural properties of this film and the thickness necessary to close the sacrificial etch holes. The density and composition of this membrane determine the hermeticity, out-gassing behavior, and internal stress. The stress together with the thickness determine the membrane rigidity and hence the sensitivity of the pressure sensor.

Critical systems in medical applications, alternative energy applications, smart buildings, engine control (e.g. gas and fuel inlet pressure), and automotive safety applications such as tire monitoring systems, require pressure sensors that deliver accurate and predictable output over their lifetime in order to track changes in operation before those changes become critical. MEMS pressure sensors are now widely used in such applications.

With increasing miniaturization, MEMS pressure sensors also start to suffer performance issues. For instance, issues arise relating to insensitivity, inaccuracy and signal drift.

Currently most MEMS pressure sensors use a hermetically sealed membrane that seals a reference cavity which is at a certain gauge pressure (in some cases the gauge pressure is a vacuum). The external pressure is measured because the pressure difference between the external pressure and the gauge pressure generates a force on the membrane, which causes the membrane to deflect. This deflection is then measured by piezoresistive, capacitive or optical sensors. There are several difficulties related to this conventional pressure sensor design.

For example, the gas pressure in the reference cavity needs to be very stable in order to avoid signal drift. This requires a very high level of hermeticity without out-gassing of the membrane.

However, in order to have a large deflection and optimum sensitivity, the thickness of the membrane should be thin or it should have a large area. Since it is difficult to make very thin membranes hermetic, these are conflicting requirements and lead to a larger sensor size.

MEMS pressure sensors are typically square or circular.

Given a process flow to manufacture a capacitive pressure sensor, the only way to increase the signal (the capacitance) is to make the sensor area larger. When a square or circular membrane is increased in size, the membrane also becomes more flexible. As a result, the pressure range reduces in which the membrane can be operated (assuming that the pressure sensor should be operated in the regime where the flexible, conducting membrane does not touch the bottom electrode) because the membrane will touch the bottom electrode at a lower pressure (the "touch-point pressure" or "collapse pressure" is reduced).

Document EP 1223420 A2 describes a pressure sensor that comprises a silicon structure having a conductive diaphragm which can deform its shape in accordance with an applied pressure. The silicon structure is provided on a substrate having an electrode and a dielectric film which covers the electrode. The shape of the diaphragm in the top view is a rectangle, wherein the ratio of the long side to the short side is not less than 3 : 1.

Document US 6,211,558 B1 refers to a surface micro-machined sensor with a pedestal. A sensor is made of a semiconductor substrate having a flat surface and active regions formed therein that are realized as high conductivity regions. A flexible membrane includes a pedestal and a surrounding elevated region bonded to bonding areas of the flat surface.

According to the invention, there is provided a MEMS pressure sensor as claimed in claim 1.

The invention provides a MEMS pressure sensor comprising opposing electrode arrangements, wherein one of the electrode arrangements is suspended over the other such that it is movable in response to an applied pressure, and means for deriving an output from a capacitance between the electrode arrangements,
wherein the movable electrode arrangement is generally rectangular, with an aspect ratio of 3 or more.

The MEMS pressure sensor is realized as a surface-micromachined capacitive-pressure-sensor.

The short side (the width) of the sensor shape defines the maximum pressure at which the sensor can be operated (the touch-point pressure), while the long side (the length) offers increased signal compared to a square or circular sensor of the same width.

An air cavity can be provided between the electrode arrangements. This will be at a pressure corresponding to the surrounding pressure when the cavity was closed. This can be a low (partial vacuum) pressure.

The invention also provides a MEMS pressure sensor arrangement, comprising a plurality of the pressure sensors of the invention formed into an array. A 3 x 1 array can for example be used to make a square overall profile from individual sensors with an aspect ratio of 3.

The invention also provides a MEMS pressure sensor arrangement comprising a plurality of pressure sensors each having a rectangular shape with an aspect ratio of 3 or larger but with different width in order to allow different pressure ranges to be measured. In a preferred embodiment these membranes have similar area to allow a good input capacitance matching of a read-out circuit.

The invention also provides a MEMS pressure sensor arrangement having a rectangular membrane that is constructed on top of a CMOS read-out circuit. The width of the membrane is tuned in such way that the collapse pressure of the membrane is larger than the maximum operating range. The length of the membrane is tuned to match optimally with the capacitance to digital converter circuitry e.g. with respect to capacitance offset and capacitance range.

Other embodiments include a MEMS pressure sensor arrangement with a pressure sensor membrane having a rectangular shape with an aspect ratio of 3 or larger and a segmented bottom electrode. A segmented bottom electrode is beneficial for calibration purposes and to cancel out electromagnetic interference effects but can also be used to match capacitance offset and capacitance range.

Examples of the invention will now be described with reference to the accompanying drawings, in which:
Figure 1 shows an example manufacturing process after some of the initial fabrication stages;
Figure 2 shows the device after further fabrication stages;
Figure 3 shows the device after further fabrication stages;
Figure 4 shows the device after the final fabrication stages;
Figure 5 shows a device after a different manufacturing process, and shows the deflection of the deformable membrane under different ambient pressures;
Figure 6 shows the relationship between the membrane flexibility and the aspect ratio;
Figure 7 shows the relationship between the sensor capacitance and the aspect ratio;
Figure 8 shows the relationship between the sensor sensitivity and the aspect ratio;
Figure 9 shows three example membrane shapes;
Figures 10a and 10b show two examples of membrane arrays; and
Figure 11 shows three examples of different bottom electrode configurations with identical membrane and top electrode geometry.

The invention provides a MEMS capacitive pressure sensor in which the deformable sensor electrode has a length to width ratio of 3 or more. This enables an optimum membrane flexibility for a given process flow so that the range of operation is increased, while also enabling an increased area to give an increased signal.

The pressure sensor can be fabricated using standard technologies, and some examples will first be described, before the features and advantages of the invention are explained.

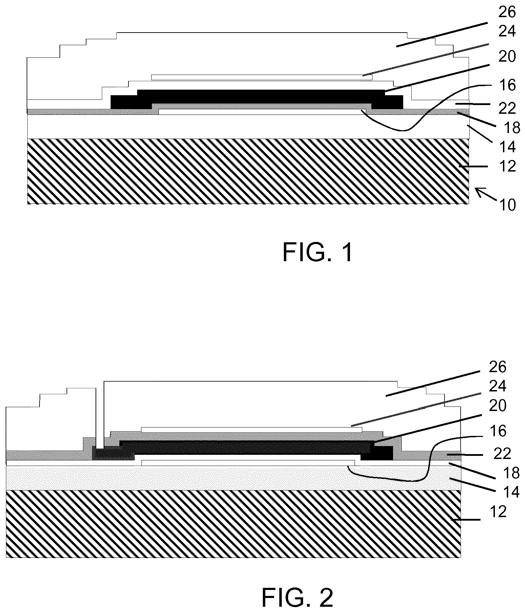

Figure 1 shows a first known process.

The pressure sensor is formed on a substrate 10 which can be a plain isolating layer 14 of silicon oxide or silicon nitride on a bare silicon wafer 12 as shown, or an isolating layer on top of a CMOS wafer with integrated electronic circuitry underneath. A bottom metal electrode 16 is deposited (typically 200nm thick PVD Al) and subsequently patterned.

An isolating silicon nitride or silicon oxide film 18 (for example 100nm of silicon nitride) is deposited on top of the metal electrode by means of PECVD or LPCVD. This is followed by the deposition of a sacrificial layer 20 which will be removed later on to form a cavity. The sacrificial layer consists of a 300-500 nm thick metallic layer (typically Mo, Al or Cr). This layer is patterned in an appropriate circular shape with flaps in order to access this layer outside the circular membrane area for the sacrificial etch.

A larger sacrificial film thickness creates a larger gap and results in an overall a smaller sensitivity but a larger dynamic pressure range. A small sacrificial film thickness could result in more processing difficulties upon removal of the sacrificial layer but is advantageous to increase the capacitance between the parallel plate electrodes as high as possible.

The sacrificial layer deposition is followed by the deposition of a PECVD silicon nitride or silicon oxide capping layer 22 which functions as a passivation layer.

This particular film is typically 200-300 nm thick and serves as etch protection for the top electrode during the sacrificial layer etch. It should be as thin as possible and have preferably a dielectric constant larger than 4 to increase the capacitive coupling. A thin top metal electrode 24 (Al) is deposited on top. The top electrode 24 should be as thin as possible (i.e. 100-200nm) to decrease the thermal expansion coefficient of the membrane. The passivation layer 22 avoids electrical contact between the two metal layers.

The top electrode is patterned and etched.

The electrode is then capped with a thick PECVD silicon nitride or oxide layer 26. The thickness and stress of this layer influences the final rigidity of the membrane. The stress in the SiNx:H layer can be tuned with the deposition conditions. Generally, the membrane width is optimized in order to define a certain pressure operating range for a given SiN membrane thickness. Typically the membrane thickness is chosen to be between 1.5 um and 2.5 um for membrane widths between 150-200 um which yield a sufficient broad dynamic pressure range between 0.5 and 2 bar. For high pressures (i.e. >2 bar) the thickness of the membrane must be increased above 2.5 um in order to create a much more stiff membrane or the membrane width must be reduced.

In order to reduce the stress gradient the SiN thicknesses below and above the metal electrodes is adjusted so that the top electrode 24 is positioned in the middle of the membrane.

The process flow is continued with the patterning and dry etching of holes stopping on the sacrificial layer 20 as shown in Figure 2. These holes are placed around the membrane i.e. outside the rectangular electrode area and are typically 1-2 um in diameter. The larger the hole diameter the easier the sacrificial material can be removed. The cavity is formed during sacrificial layer etch. The sacrificial layer can be selectively removed with a wet PES etch (mixture of Phosphoric acid, Sulphuric acid, and Acetic acid) or with a dry etch method using chlorine.

After an anneal at 400°C-450°C to remove water and to remove excess of hydrogen form the SiNx:H membrane "Hot" PVD Al is deposited at 350°C chuck temperature. Upon using "Al-reflow" during the non-conformal Al deposition the etch holes will effectively seal the hole without a "seam" at PVD base pressure.

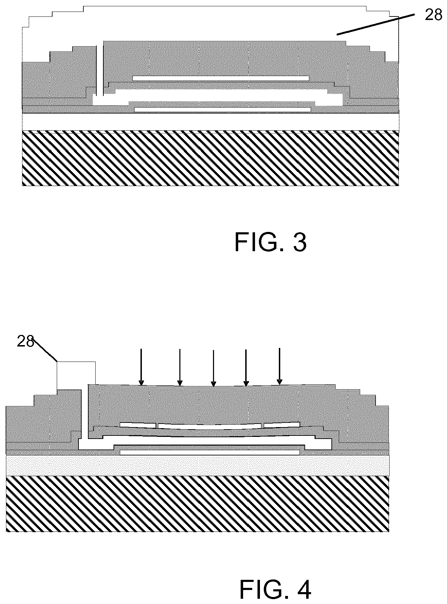

Figure 3 shows the aluminium etch hole sealing/plugging layer 28.

The required thickness of the etch hole sealing layer 28 for effective closure depends on the diameter of the hole and the gap diameter. For a large gap heights (e.g. >1um) in combination with large etch holes (e.g. 2um diameter) a rather thick Al layer (5um) is required for closure. Typical dimensions for the etch hole diameter is 1 um and 2 um for the Al plug layer thickness.

Al is then removed from the membrane by wet or dry etching using a mask (or without mask but then a timed etch is required). Depending on the membrane rigidity/thickness the membrane will be deflected due to vacuum inside cavity when the membrane is exposed to ambient pressure after the Al removal. The resulting structure is shown in Figure 4, in which a plug remains,

Finally, electrical connections need to be fabricated to contact the top and bottom electrodes. Electrical connections and bond pads are created by subsequent patterning, etching and deposition of Al using standard manufacturing methods.

It is particularly interesting to form the pressure sensor on top of an integrated circuit, such as CMOS circuit, so that a fully integrated solution results. If desired, the top metal layer of a CMOS circuit can be used to enable the formation of interconnects so that electrical connections can be made beneath the pressure sensor without requiring cross overs.

The pressure sensor can be provided over the CMOS top passivation layer, and the integration on CMOS enables an increase in signal to noise ratio as well as a reduction in parasitic capacitances due to bond wires.

A number of process flows are suitable for forming the pressure sensor over a CMOS circuit.

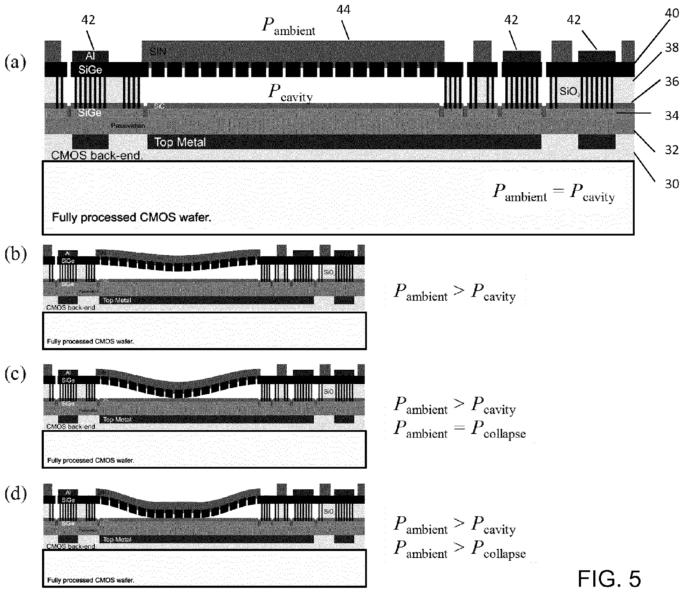

Figure 5 shows a pressure sensor formed on top of a CMOS circuit, and also shows the different operating conditions.

A first example is based on a SiGe flow, with an Al bottom electrode, PECVD SiC capping layer, a sacrificial oxide, SiGe top electrode and PECVD SiN sealing layer.

The process starts with the CMOS circuit, with its top metal interconnect 30 covered with a PECVD SiN passivation layer 32 (e.g. thickness 600nm).

The bottom electrode pattern 34 is formed from SiGe. The bottom electrode pattern has the bottom electrode (or electrodes) as well as read out lines.

A SiC layer 36 is then formed on top of the bottom electrode to prevent shorts between the top and bottom electrodes and to avoid etching of the SiN passivation layer by the sacrificial HF vapor etch. The sacrificial SiO2 layer 38 is then deposited, with typical thickness 0.5 to 1 µm. This defines the pressure sensor gap. The SiC layer can optionally be planarized first with an oxide fill and CMP process which stops on the SiC layer. In an example the SiC layer can be replaced by a Si-rich SiN etch stop layer.

Anchor structures can be formed by patterning vias which extend through the sacrificial oxide and the SiC layer to make contact with the bottom electrode.

The top electrode 40 is then deposited using a one or two step SiGe deposition. A first process fills the anchor vias (e.g. 400nm SiGe at 400 degrees C for 30 minutes) and a second can be used to increase the thickness.

The top SiGe electrode is then patterned. A first pattern is used to define separate bond pads, and a second pattern is used to form the sacrificial etch openings to the pressure sensor cavity.

Al contact pad 42 electrodes are then patterned and the sacrificial etch then takes place. A capping layer 44 can then be formed for example TEOS or SiN or SiC with a thickness 1 to 2 µm. This capping layer determines the base pressure and outgassing performance. Openings are needed to the contact pad electrodes 42.

The SiGe films can be deposited on top of a CMOS circuit at 400C without degradation of metal line resistance/transistor performance. Stable SiGe films do not show creep and have well controlled bending deflection profile (low tensile stress). There is a small thermal expansion coefficient mismatch of SiGe electrodes to Si so that the temperature sensitivity of the membrane is minimized. Buckling of the SiGe membrane during the sealing layer deposition can be avoided if the stress of the SiGe is tuned to sufficiently high tensile stress (i.e. >100 MPa tensile). If stress in the SiGe is too low with respect to the sealing temperature, buckling could occur resulting in an uncontrolled gap height and low pressure sensitivity. The thin PECVD SiC layer on top of bottom electrode gives good dielectric isolation, and the device can be operated in collapse (no shorts between top and bottom). Also other dielectric isolation layers can be employed such as PECVD SiN, and Si-rich SiN. The small variation in pressure sensor performance can be achieved over the wafer, if the membrane thickness and cavity height have good uniformity (these heights are deposition controlled and not CMP controlled).

An alternative process flow makes use of a tungsten top electrode.

Up to and including the patterning of the anchor vias in the sacrificial oxide layer, the process is the same as described above.

Instead of forming a SiGe top electrode, W is formed by a CVD process. This has a well-controlled gap height so that no CMP process is needed. W has a low CTE mismatch and high stress, which avoids buckling during the high temperature sealing step.

The top electrode pattern is W instead of SiGe and the process flow then continues as described above. In addition to the advantages outlined above, this process takes advantage of the small thermal expansion coefficient mismatch of W electrodes to Si to avoid bucking and to give a low temperature sensitivity of the membrane. It also avoids the need for SiGe tools so gives a lower capital expenditure.

The invention can be applied to any of these processes.

Figure 5(a) thus shows only one example of a surface-micromachined capacitive-pressure-sensor structure provided on top of a CMOS structure.

The two capacitor electrodes (SiGe, in this example) are separated by an air gap, creating a cavity. This can be at a reduced pressure by sealing the cavity in a vacuum.

The membrane deflects due to a pressure difference between the ambient pressure Pambient and the cavity pressure Pcavity.

Figures 5(b) to 5(d) show the membrane deformation for increasing ambient pressure.

The initial deflection in Figure 5(b) arises when the ambient pressure is above the cavity pressure, and within the measurement range of the sensor.

Figure 5(c) shows the membrane just touching the substrate, and this is denoted as "collapse". The pressure at which collapse occurs is known as the collapse pressure or touch-point pressure Pcollapse.

Figure 5(d) shows the membrane above the touch-point pressure.

It is preferred to operate the sensor below the touch-point pressure in order to avoid hysteresis and charging effects due to the membrane being in contact with the material at the bottom of the cavity. Hence, the sensor should be designed such that its touch-point pressure (collapse pressure) is above the application-specified pressure range that the sensor is meant to operate in. The collapse pressure is mainly defined by the cavity height (also denoted as the gap, gap distance, gap thickness or gap height) and the membrane flexibility.

The membrane flexibility, i.e. the deflection of the membrane due to a pressure difference P, depends on the membrane properties: its geometry as well as its material properties. Assuming that the process flow is fixed, this implies that all membrane material properties and layer thicknesses are fixed, as well as the gap height. The only way to tune the membrane flexibility and the collapse pressure is by adjusting the membrane size and/or shape.

The output signal of the capacitive sensor mainly depends on the gap distance, the sensor area and the membrane flexibility. For a given process flow, the gap distance is fixed. Because of the requirement that the touch-point pressure should be above the operational pressure range, the membrane flexibility is limited to a maximum value, thus also limiting the possibilities of improving the output signal via flexibility. The only remaining method to improve the output signal is, thus, via the sensor area.

For square and circular membranes, the flexibility is nevertheless directly influenced by the sensor size: a larger membrane is more flexible. Hence, also the area and, thus, output signal of (single) square and circular membranes is limited by the requirement on the touch-point pressure.

The invention is based on adjusting the shape such that the sensor area increases, while the flexibility and, thus, touch-point pressure are not influenced.

The invention provides rectangular membranes, and in particular a membrane design with an aspect ratio of 3 or more.

Finite-element simulations have been performed to compare the behavior of square membranes with that of rectangular membranes.

It has been found that elongating the membrane makes the membrane more flexible: the touch-point pressure reduces. When the membrane length is approximately 3 times longer than its width, a further elongation does not influence the touch-point pressure any more, while it does improve the performance. The simulation results are illustrated in the following graphs.

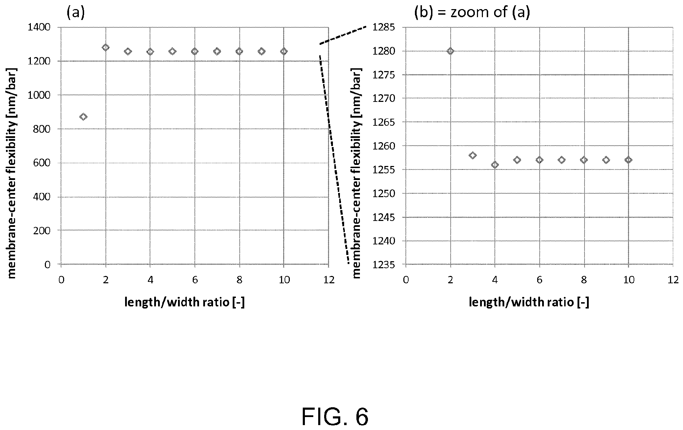

Figure 6 shows the membrane flexibility (the membrane-center deflection due to 1 bar pressure) as a function of the length-to-width ratio. The situation with L=W (aspect ratio of 1) corresponds to a square membrane. Figure 6(b) zooms in on the data of Figure 6(a), showing that for L ≥ 3 W (aspect ratio ≥ 3) the membrane flexibility and, thus, the collapse pressure, are (well enough) independent of further elongation of the membrane.

The simulations have been performed for three different membranes, representing three different types of membrane deflection behavior (stress-dominated behavior, stiffness-dominated behavior and intermediate-regime behavior), in order to span the whole range of possible membrane deflection profiles. The simulation results of the three membranes were very similar concerning the length-to-width ratio. Therefore, the results are only shown for one membrane type, the type that exhibits intermediate-range behavior.

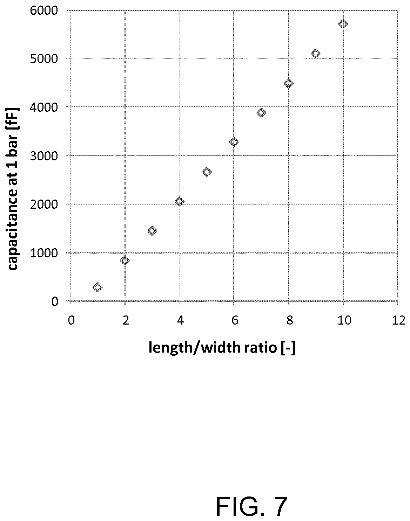

Figure 7 shows that the simulated sensor capacitance increases linearly with L/W, which is in agreement with expectations, since the capacitance depends linearly on the sensor area.

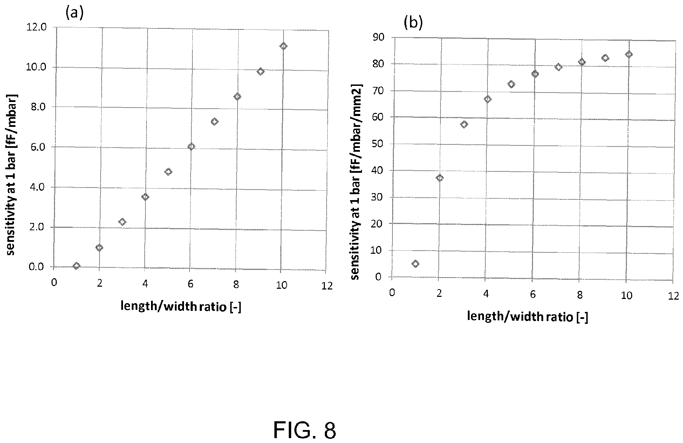

Figure 8 shows simulation results for the dependence of the sensor sensitivity on the aspect ratio, i.e. L/W. Figure 8(a) shows that the absolute sensitivity, expressed in capacitance change in fF per pressure change in mbar, increases linearly with L/W, in accordance with Figure 7. Figure 8(b) shows the sensitivity, normalized to the sensor area. Also this area-normalized sensitivity increases with L/W, although less than linearly, because, besides the absolute sensitivity, also the area increases with L/W.

An alternative method to increase the signal while keeping the same operational range (touch-point pressure) is to combine multiple sensors, for example in an array. Combining sensors might nevertheless reduce the performance of the total device due to process spread between the different sensors. Another disadvantage is that always a minimum spacing is required in between the membranes for anchor points to support the suspended membranes which increases the total sensor area considerably.

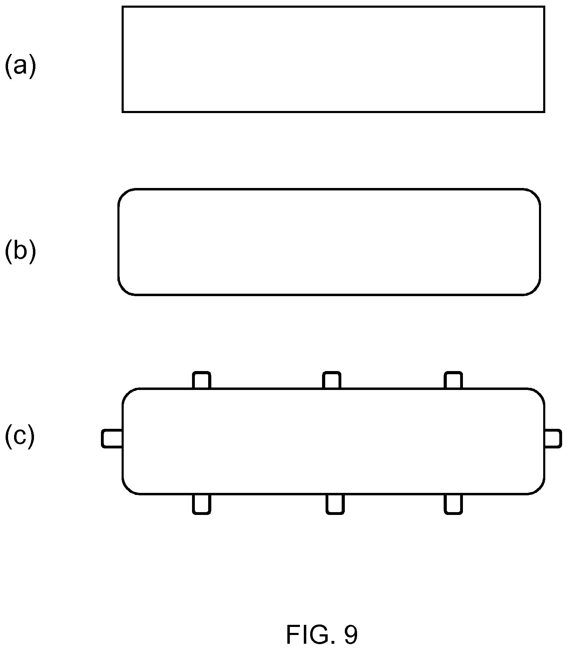

Figure 9 shows three possible membrane shapes. Figure 9(a) shows a basic rectangle. The rectangular membrane can of course have rounded corners to avoid localized stress build up at the corners thereby improving reliability, as shown in Figure 9(b). Figure 9(c) shows a rectangular membrane with additional tabs on the edge of the membrane. The access holes can be located on these slabs for the sacrificial layer release etch. The membrane deflection properties are similar because they are determined by the width of the membrane.

Of course, (generally) rectangular membranes in accordance with the invention can still be combined in an array. Instead of putting a 3x3 array of square of circular membranes on a die, it is also possible to design an array of 3x1 elongated membranes on a die of similar shape and area.

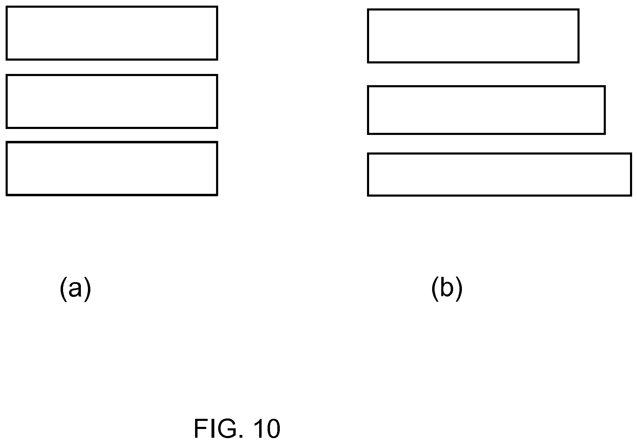

In Figure 10a, an array of three identical membranes is depicted. In Figure 10b, a membrane array is shown of three membranes with different width each having an aspect ratio of 3 or higher but with identical area to allow different pressure ranges to be measured.

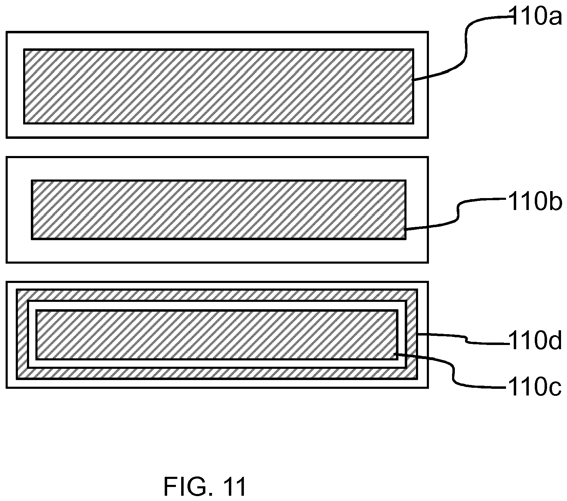

Figure 11 shows three examples of different bottom electrode configurations but with identical membrane and top electrode geometry.

Figures 11(a) and 11(b) shows arrangements with bottom electrode configuration 110a and 110b that has a higher aspect ratio than the cavity. This allows the signal to noise ratio of the device to be improved as the central part of the rectangular shaped membrane contributes most to a capacitance change. The outer part of the membrane deflects much less than the central part and gives, therefore, a more or less constant contribution to the measured capacitance.

Figure 11(c) shows a geometry with a segmented bottom electrode design, having an inner electrode 110c and a surrounding outer electrode 110d. A segmented electrode design is beneficial to improve EMI shielding, reduce leakage current between the top and bottom electrodes, and to improve the signal to noise ratio.

As outlined above, the pressure sensor of the invention can be integrated on top of an integrated circuit (that comprises capacitive read-out circuit elements). Using this "on top of CMOS" manufacturing approach has several advantages. It allows, for instance:
reduction of form factor;
reduction of expensive Si area compared to "next to CMOS" or dual-die options;
reduction of packaging costs by using a single-die solution;
reduction of parasitics (no wire bonds, such as needed for a dual-die solution);
ultra-low power consumption due to capacitive read-out;
higher sensitivity due to capacitive read-out method (dC/dP) instead of piezo-resistive read-out (dR/dP);
combination with several other sensor modalities on one die, for instance to correct for cross-sensitivities such as temperature.

Various examples for how to manufacture the sensor have been given above. Possible electrode materials are Al, Ti, TiN, W, TiW, SiC or combinations thereof. The sacrificial holes are sealed in the example above with silicon nitride, but sealing layers can comprise of SiN, Si-rich SiN, SiO2, a-Si, SiGe, metallic plugs such as Al or Ti, or combinations thereof. The dielectric layer present in the gap can be SiC, SiN or Si-rich SiN). Other manufacturing methods are also possible.

## Claims

1. A MEMS pressure sensor comprising opposing electrode arrangements (16, 18; 22, 24, 26; 34, 36; 40, 44), wherein one of the electrode arrangements (16, 18; 22, 24, 26; 34, 36; 40, 44) is suspended over the other such that it is movable in response to an applied pressure (Pambient), and means for deriving an output from a capacitance between the electrode arrangements (16, 18; 22, 24, 26; 34, 36; 40, 44),
wherein the MEMS pressure sensor is realized as a surface-micromachined capacitive-pressure-sensor,
**characterized by**
a membrane comprising the movable electrode arrangement (22, 24, 26; 40, 44), which is generally rectangular, with a length to width aspect ratio of 3 or more.

2. A sensor as claimed in claim 1, comprising an air cavity between the electrode arrangements (16, 18; 22, 24, 26; 34, 36; 40, 44).

3. A sensor as claimed in claim 1, comprising a low pressure cavity between the electrode arrangements (16, 18; 22, 24, 26; 34, 36; 40, 44).

4. A sensor as claimed in any preceding claim, wherein the lower electrode arrangement (34, 36) is provided over an integrated circuit.

5. An arrangement as claimed in any preceding claim, wherein the membrane is rectangular with rounded corners.

6. An arrangement as claimed in claim 5, wherein the membrane comprises additional tabs oriented around the edge of the membrane.

7. An arrangement as claimed in any preceding claim comprising a bottom electrode configuration (110a, 110b) that has a higher aspect ratio than the cavity.

8. An arrangement as claimed in any preceding claim comprising a segmented bottom electrode configuration (110c, 110d).

9. A MEMS pressure sensor arrangement, comprising:
a plurality of pressure sensors, each as claimed in any preceding claim formed into an array.

10. An arrangement as claimed in claim 9, wherein the array is a 3 x 1 array.

11. An arrangement as claimed in claim 9 or 10, wherein the membranes of the array are rectangular and of different width.

12. An arrangement as claimed in claim 11, wherein the rectangular membranes have different width but with identical area.

## Patentansprüche

1. MEMS-Drucksensor
mit gegenüberliegenden Elektrodenanordnungen (16, 18; 22, 24, 26; 34, 36; 40, 44), wobei eine der Elektrodenanordnungen (16, 18; 22, 24, 26; 34, 36; 40, 44) so über der anderen aufgehängt ist, dass sie als Reaktion auf einen angelegten Druck (Pambient) bewegbar ist, und
mit Mitteln zum Ableiten eines Ausgangssignals aus einer Kapazität zwischen den Elektrodenanordnungen (16, 18; 22, 24, 26; 34, 36; 40, 44),
wobei der MEMS-Drucksensor als oberflächenmikrobearbeiteter kapazitiver Drucksensor realisiert ist,
**gekennzeichnet durch**
eine Membran, welche die bewegbare Elektrodenanordnung (22, 24, 26; 40, 44) umfasst, die im Allgemeinen rechteckig ist, mit einem Länge/Breite-Aspektverhältnis von 3 oder mehr.

2. Sensor nach Anspruch 1, umfassend einen Luftraum zwischen den Elektrodenanordnungen (16, 18; 22, 24, 26; 34, 36; 40, 44).

3. Sensor nach Anspruch 1, umfassend einen Niederdruckhohlraum zwischen den Elektrodenanordnungen (16, 18; 22, 24, 26; 34, 36; 40, 44).

4. Sensor nach einem der vorhergehenden Ansprüche, wobei die untere Elektrodenanordnung (34, 36) über einer integrierten Schaltung angeordnet ist.

5. Anordnung nach einem der vorhergehenden Ansprüche, wobei die Membran rechteckig mit abgerundeten Ecken ist.

6. Anordnung nach Anspruch 5, wobei die Membran zusätzliche Streifen aufweist, die um den Rand der Membran herum ausgerichtet sind.

7. Anordnung nach einem der vorhergehenden Ansprüche, umfassend eine untere Elektrodenkonfiguration (110a, 110b), die ein größeres Aspektverhältnis als der Hohlraum hat.

8. Anordnung nach einem der vorhergehenden Ansprüche, umfassend eine segmentierte untere Elektrodenkonfiguration (110c, 110d).

9. MEMS-Drucksensoranordnung, umfassend:
eine Vielzahl von Drucksensoren, jeweils nach einem der vorhergehenden Ansprüche, die zu einem Array geformt sind.

10. Anordnung nach Anspruch 9, wobei das Array ein 3 x 1 Array ist.

11. Anordnung nach Anspruch 9 oder 10, wobei die Membranen des Arrays rechteckig und von unterschiedlicher Breite sind.

12. Anordnung nach Anspruch 11, wobei die rechteckigen Membranen unterschiedlich breit sind, aber identische Flächeninhalte aufweisen.

## Revendications

1. Capteur de pression MEMS comprenant
des agencements d'électrode (16, 18 ; 22, 24, 26 ; 34, 36 ; 40, 44) opposés, sachant que l'un des agencements d'électrode (16, 18 ; 22, 24, 26 ; 34, 36 ; 40, 44) est suspendu au-dessus de l'autre de telle sorte qu'il soit mobile en réponse à une pression appliquée (Pambiant), et
des moyens de dériver une sortie d'une capacitance entre les agencements d'électrode (16, 18 ; 22, 24, 26 ; 34, 36 ; 40, 44),
sachant que le capteur de pression MEMS est réalisé comme capteur de pression capacitif à surface micro-usinée, **caractérisé par**
une membrane comprenant l'agencement d'électrode mobile (22, 24, 26 ; 40, 44), laquelle est sensiblement rectangulaire, avec un rapport d'aspect de longueur à largeur de 3 ou plus.

2. Capteur tel que revendiqué dans la revendication 1, comprenant une cavité d'air entre les agencements d'électrode (16, 18 ; 22, 24, 26 ; 34, 36 ; 40, 44).

3. Capteur tel que revendiqué dans la revendication 1, comprenant une cavité à basse pression entre les agencements d'électrode (16, 18 ; 22, 24, 26 ; 34, 36 ; 40, 44).

4. Capteur tel que revendiqué dans une quelconque revendication précédente, sachant que l'agencement d'électrode inférieur (34, 36) est disposé au-dessus d'un circuit intégré.

5. Agencement tel que revendiqué dans une quelconque revendication précédente, sachant que la membrane est rectangulaire à angles arrondis.

6. Agencement tel que revendiqué dans la revendication 5, sachant que la membrane comprend des pattes supplémentaires orientées autour du bord de la membrane.

7. Agencement tel que revendiqué dans une quelconque revendication précédente, comprenant une configuration d'électrode inférieure (110a, 110b) qui a un rapport d'aspect plus élevé que la cavité.

8. Agencement tel que revendiqué dans une quelconque revendication précédente, comprenant une configuration d'électrode inférieure (110c, 110d) segmentée.

9. Agencement de capteur de pression MEMS, comprenant : une pluralité de capteurs de pression, chacun étant tel que revendiqué dans une quelconque revendication précédente, formés en réseau.

10. Agencement tel que revendiqué dans la revendication 9, sachant que le réseau est un réseau de 3 x 1.

11. Agencement tel que revendiqué dans la revendication 9 ou 10, sachant que les membranes du réseau sont rectangulaires et de largeur différente.

12. Agencement tel que revendiqué dans la revendication 11, sachant que les membranes rectangulaires ont une largeur différente mais sont de superficie identique.
